# EUROPEAN PATENT APPLICATION

(11) **EP 4 711 808 A1**
(43) Date of publication of application: **18.03.2026**
(21) Application number: 25195904.5
(22) Date of filing: 14.08.2025
(51) Int. Cl.: G01S 7/40, G01S 7/497, G01S 7/52, G01S 7/22, G01S 7/51, G01S 7/62, G01S 13/931, G01S 17/931, G01S 15/931

(54) **VEHICLE OPERATION SIMULATOR SYSTEM**

(30) Priority: 12.09.2024 JP 2024158002
(71) Applicant: AISIN CORPORATION, Aichi 448-8650 (JP)
(72) Inventor: MARUOKA, Tetsuya, Kariya, Aichi, 448-8650 (JP); HAYASHIDA, Naoto, Kariya, Aichi, 448-8650 (JP); HASHIMOTO, Kaisei, Kariya, Aichi, 448-8650 (JP); NAKASHO, Takayuki, Kariya, Aichi, 448-8650 (JP); OGUE, Ken, Kariya, Aichi, 448-8650 (JP); OGINO, Atsuto, Kariya, Aichi, 448-8650 (JP)
(74) Representative: TBK

(57) **Abstract**

A vehicle operation simulator system (1) includes: a virtual object arrangement unit (40) configured to arrange a virtual object on a real field; a virtual object detection unit (40) configured to detect the virtual object by, using a virtual sensor (22A to 22L) assumed to be installed at a predetermined installation position in a predetermined installation direction in a vehicle (2), pseudo-simulating transmission of a search wave from the installation position to surroundings of the vehicle along the installation direction and reception of a reflected wave of the search wave reflected by the virtual object around the vehicle; and an image visual recognition unit (40) configured to cause the real field to be visually recognized, the real field being superimposed with at least one of a search wave image (10) indicating a travel state of the search wave transmitted from the virtual sensor and a reflected wave image (21) indicating a travel state of the reflected wave when the search wave is reflected by the virtual object.

## Description

### TECHNICAL FIELD

This disclosure relates to a vehicle operation simulator system for simulating an operation of a vehicle.

### BACKGROUND DISCUSSION

In recent years, as a traveling mode of a vehicle, there has been newly proposed an automated driving assistance system that assists a user in driving the vehicle by executing a part or all of driving operations of the user on a vehicle side in addition to manual traveling based on a driving operation of the user. In the automated driving assistance system, a vehicle is provided with a detection sensor for detecting an object (for example, a person, a bicycle, another vehicle, and a wall) around the vehicle, such as an ultrasonic sensor, a millimeter-wave radar sensor, or a LiDAR sensor, and vehicle control of a steering wheel, a drive source, a brake, or the like is automatically performed based on a detection result of the detection sensor.

Here, in the process of developing a vehicle control system such as the above-described automated driving assistance system, it is necessary to perform a process of testing whether a prototype vehicle control system is correctly operated under an actual travel environment. In the related art, the test is performed by mounting a prototype vehicle control system on a vehicle and causing the vehicle to actually travel on a field on which objects and the like are arranged. However, the test needs to be performed under various travel environments, and thus it is necessary to change types of objects or rearrange the objects in order to change the environment, and a preparation period before the test is started is required to be very long. Therefore, it has been proposed to perform the above test by implementing a virtual travel environment by arranging a virtual object that does not actually exist (hereinafter referred to as a virtual object) on a real field, and mounting a virtual sensor for detecting the virtual object on a vehicle (for example, Korean Patent Application No. 10-1357596 (Reference 1).

Here, the virtual object set in the travel environment in Reference 1 (paragraphs 0041 to 0045) is an object that does not actually exist, and the virtual sensor for detecting the virtual object is not actually installed on an outer wall of the vehicle, and search waves are not transmitted to the surroundings of the vehicle. Therefore, it is possible to confirm how the virtual sensor transmits the search waves and receives reflected waves to detect the virtual object by analyzing a result after the test, but it is difficult for an occupant of the vehicle or an observer of the test outside the vehicle to know the result in real time. Therefore, it is difficult to evaluate whether a behavior of the vehicle is an appropriate behavior with respect to a detection result of the virtual object.

A need thus exists for a vehicle operation simulator system capable of allowing an occupant or an observer to visually recognize, in real time, a detection range or a detection status of a virtual object detected by a virtual sensor in a manner of overlapping the detection range or the detection status on a real field in a travel test of a vehicle performed by arranging the virtual object on the real field.

### SUMMARY

According to an aspect of this disclosure, a vehicle operation simulator system includes: a virtual object arrangement unit configured to arrange a virtual object on a real field; a virtual object detection unit configured to detect the virtual object by, using a virtual sensor assumed to be installed at a predetermined installation position in a predetermined installation direction in a vehicle, pseudo-simulating transmission of a search wave from the installation position to surroundings of the vehicle along the installation direction and reception of a reflected wave of the search wave reflected by the virtual object around the vehicle; and an image visual recognition unit configured to cause the real field to be visually recognized, the real field being superimposed with at least one of a search wave image indicating a travel state of the search wave transmitted from the virtual sensor and a reflected wave image indicating a travel state of the reflected wave when the search wave is reflected by the virtual object.

The "virtual object" is not limited to a stationary object and may be a moving object as long as the object can be detected by the search wave. In the case of a moving object, a schedule for moving is set in advance.

According to the vehicle operation simulator system of this disclosure having the above configuration, in a travel test of the vehicle in which the virtual object is arranged on the real field, an occupant or an observer can visually recognize, in real time, a detection range and a detection status of the virtual object detected by the virtual sensor in a manner of overlapping the detection range or the detection status on the real field. As a result, it is clear how the virtual sensor transmits the search wave and receives the reflected wave to detect the virtual object, and it is also possible to evaluate, by eyes of a person, whether a behavior of the vehicle is an appropriate behavior with respect to a detection result of the virtual object.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration view illustrating a vehicle operation simulator system according to the present embodiment;
Fig. 2 is a view illustrating real sensors installed at a vehicle;
Fig. 3 is a view illustrating a method of detecting an object by a real sensor disposed at a front side of a vehicle;
Fig. 4 is a view illustrating a method of detecting an object by a real sensor disposed at a side of a vehicle;
Fig. 5 is a view illustrating an example of displaying, on an in-vehicle display, a real scene video of a real field superimposed with a search wave image;
Fig. 6 is a view illustrating an example of displaying, on the in-vehicle display, a real scene video (overhead image) of a real field superimposed with a search wave image;
Fig. 7 is a view illustrating a search wave image;
Figs. 8A and 8B are views illustrating a reflected wave image;
Fig. 9 is a view illustrating a modification of a search wave image;
Fig. 10 is a view illustrating an example of displaying, on a VR headmount display, a real scene video of a real field superimposed with a search wave image;
Fig. 11 is a view illustrating an example of displaying, on a rearview mirror, a real scene video of a real field superimposed with a search wave image;
Fig. 12 is a view illustrating an example of displaying, from multiple viewpoints, a real scene video of a real field superimposed with an image indicating a virtual object;
Fig. 13 is a schematic configuration view illustrating a vehicle according to the present embodiment;
Fig. 14 is an appearance view illustrating a virtual sensor provided in a simulator device;
Fig. 15 is a view illustrating an internal structure of the virtual sensor;
Fig. 16 is a block diagram illustrating a configuration of the simulator device according to the present embodiment;
Fig. 17 is a flowchart illustrating an operation evaluation program according to the present embodiment; and
Fig. 18 is a view in which a travel direction (directivity) and a travel range (detection region) of search waves transmitted from the virtual sensor are specified.

### DETAILED DESCRIPTION

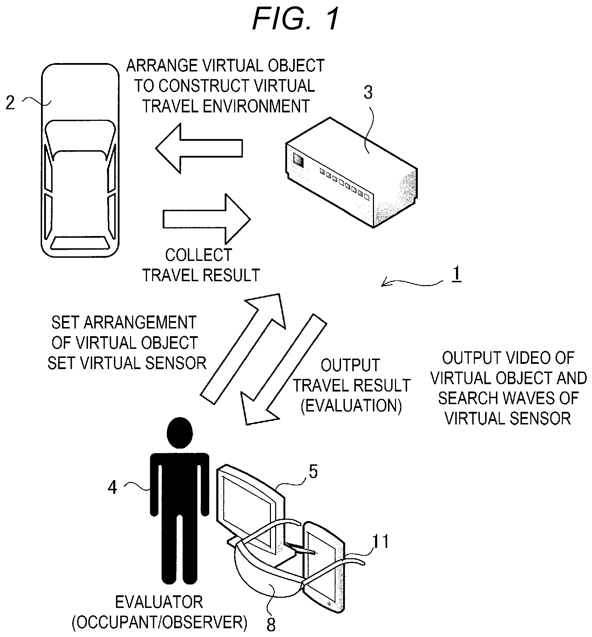

Hereinafter, a vehicle operation simulator system according to an embodiment disclosed here will be described in detail with reference to the drawings. First, a schematic configuration of a vehicle operation simulator system 1 according to an embodiment will be described with reference to Fig. 1. Fig. 1 is a schematic configuration view illustrating the vehicle operation simulator system 1 according to the present embodiment.

As illustrated in Fig. 1, the vehicle operation simulator system 1 according to the present embodiment basically includes a vehicle 2 that is a target of a travel test by simulation, and a simulator device 3 that provides the vehicle 2 with a virtual travel environment that is a travel environment of the travel test, and acquires, analyzes, evaluates, and outputs an operation result of the travel test of the vehicle 2. In the following embodiment, an evaluation target of quality evaluation in the travel test is an automated driving assistance system that assists an occupant in driving of a vehicle by performing a part or all of driving operations of the occupant on the vehicle side, and the vehicle 2 is a vehicle on which the automated driving assistance system to be evaluated is mounted.

The travel test is one of processes for finding and correcting a failure of the automated driving assistance system on a producer side before shipment, and it is confirmed whether a failure occurs by simulating operations under various assumed travel environments of the automated driving assistance system and acquiring and analyzing operation results. The travel test is performed by causing the vehicle 2 to actually travel on a real field (for example, a wide flat road surface on which nothing is present in the surroundings), and further, the travel test can be performed under various travel environments on the same real field by providing a virtual travel environment by the simulator device 3.

The simulator device 3 is mounted on the vehicle 2 and is connected to the vehicle 2 via an in-vehicle network such as a CAN so as to achieve bidirectional communication. However, the simulator device 3 is not necessarily mounted on the vehicle 2, and a part or all of the simulator device 3 may be installed outside the vehicle 2. In that case, for example, the simulator device 3 is connected to the vehicle 2 by wireless communication so as to achieve bidirectional communication. The simulator device 3 includes an operation unit such as a keyboard, a display as a display unit, and the like, and can input and output various types of information by an operation of an evaluator (observer or occupant) 4 who evaluates the automated driving assistance system. In particular, the evaluator 4 inputs, to the simulator device 3, a position and a type of a virtual object to be arranged as a travel environment on a real field on which the vehicle 2 travels. Then, the simulator device 3 constructs a virtual travel environment for performing a travel test for the vehicle 2 according to the input travel environment.

The simulator device 3 includes a virtual sensor for the vehicle 2 to detect the virtual object constructed as the travel environment, and outputs a detection result obtained by causing the vehicle 2 traveling on the real field to detect the virtual object with the virtual sensor to a control device that controls automated driving assistance on the vehicle 2 side. As a result, the vehicle side can reproduce a travel environment closer to reality in which the virtual object is recognized as an actually existing target object (for example, a person, a bicycle, another vehicle, a wall, or the like).

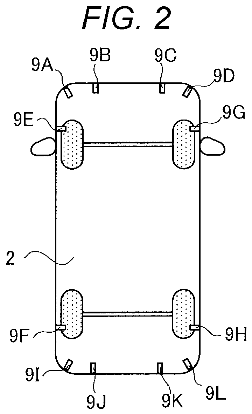

The evaluator 4 operates the simulator device 3 in advance to input and set an assumed installation position and installation direction of the virtual sensor. Here, the installation position and the installation direction of the virtual sensor follow an installation position and an installation direction of a sensor actually mounted at the vehicle 2 to be tested. For example, Fig. 2 is a view illustrating sensors 9A to 9L (hereinafter, referred to as real sensors in comparison with a virtual sensor) that are actually installed at the vehicle 2. Although the real sensors 9A to 9L will be described as ultrasonic sensors in the following description, millimeter wave sensors or radar sensors may be used instead of the ultrasonic sensors.

As illustrated in Fig. 2, the real sensors 9A to 9L are disposed at predetermined intervals on a front portion, a rear portion, and side portions of the vehicle, and transmit ultrasonic waves as search waves to the surroundings of the vehicle 2 and receive reflected waves of the transmitted search waves reflected by objects around the vehicle, thereby detecting an object that reflects the search waves. Specifically, the real sensors 9A to 9L are of a type of a distance measurement sensor that can detect a distance (distance measurement value) to the object that reflects the search waves by measuring a time from the transmission to the reception. The real sensors 9A to 9L can each generate an output signal (including a distance to the detected object) corresponding to a reception result of the received waves and output the output signal to a control unit of the vehicle. However, since a virtual sensor is used instead of the real sensors 9A to 9L at least during the test, for example, a signal input to the control unit can be switched between an output signal from the real sensors 9A to 9L and an output signal from the virtual sensor by providing a changeover switch or the like.

Installation positions and installation directions of the respective real sensors 9A to 9L can be set as appropriate. In the present embodiment, to set a detection range of an object to all orientations including front, rear, and left and right directions of a travel direction of the vehicle 2, for example, the real sensors 9A to 9D are provided on a front side of the vehicle 2 in a manner of being directed to the travel direction such that a transmission direction of the search waves is forward in the travel direction of the vehicle. The real sensors 9E and 9F are provided on a left side surface of the vehicle 2 in a manner of being directed to a left direction such that a transmission direction of the search waves is leftward in the travel direction of the vehicle. The real sensors 9G and 9H are provided on a right side surface of the vehicle 2 in a manner of being directed to a right direction such that a transmission direction of the search waves is rightward in the travel direction of the vehicle. The real sensors 9l to 9L are provided on a rear surface of the vehicle 2 in a manner of being directed to a direction opposite to the travel direction such that a transmission direction of the search waves is toward the rear of the vehicle. The real sensors 9A to 9L are substantially at the same height from a ground surface.

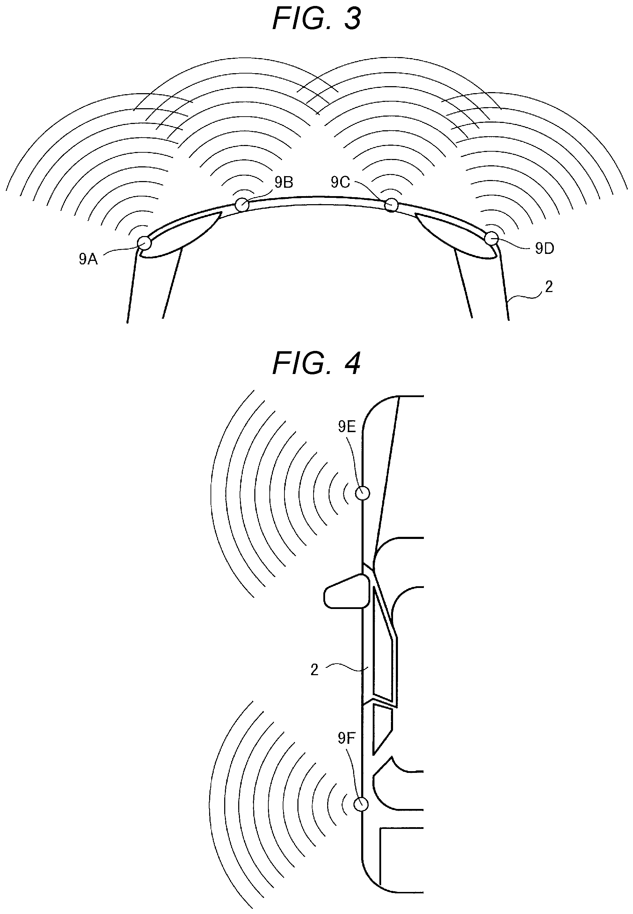

In particular, when the real sensors 9A to 9D are described as an example, it is desirable that the real sensors 9A to 9D are installed at different positions around a front bumper of the front surface of the vehicle 2 or a front grille above the front bumper at equal intervals without deviation in a left-right direction as illustrated in Fig. 3, and can transmit search waves to a wider range in front of the vehicle (that is, an object detectable range is a wider range).

Specifically, as illustrated in Fig. 3, the real sensor 9A is installed in the vicinity of a left front corner of the vehicle 2 in a direction in which a transmission direction of search waves is inclined slightly to the left direction from the travel direction of the vehicle 2 so as to transmit the search waves to the left front of the vehicle 2. The real sensor 9B is installed slightly to the left of a center line of the vehicle 2 in a direction in which a transmission direction of search waves is directed to the travel direction of the vehicle so as to transmit the search waves particularly centered on the left side in front of the vehicle 2. The real sensor 9C is installed slightly on the right of the center line of the vehicle 2 in a direction in which a transmission direction of search waves is directed to the travel direction of the vehicle so as to transmit the search waves particularly centered on the right side in front of the vehicle 2. The real sensor 9D is installed in the vicinity of a right front corner of the vehicle 2 in a direction in which the transmission direction of search waves is inclined slightly to the right direction from the travel direction of the vehicle 2 so as to transmit the search waves to the right front of the vehicle 2. The real sensor 9A and the real sensor 9D, and the real sensor 9B and the real sensor 9C are arranged symmetrically with respect to the vehicle center line in a plan view. Although not illustrated, the same applies to the real sensors 9l to 9L on the rear surface of the vehicle 2 in a vertically symmetrical manner. Further, although illustration of the transmission direction of search waves with respect to a height direction (vertical direction) is omitted, the transmission direction is set to be a horizontal direction.

On the other hand, as illustrated in Fig. 4, the real sensor 9E and the real sensor 9F on the side are installed so as to transmit search waves in a direction intersecting the travel direction of the vehicle 2 by 90 degrees. Although not illustrated, the same applies to the real sensor 9G and the real sensor 9H on the right side surface of the vehicle 2 in a bilaterally symmetrical manner. Further, although illustration of the transmission direction of search waves with respect to a height direction (vertical direction) is omitted, the transmission direction is set to be a horizontal direction.

Installation position and installation directions of virtual sensors set in the present embodiment follow the installation positions and the installation directions of the real sensors 9A to 9L described above. That is, the test is performed on the assumption that virtual sensors (a total of 12 sensors) are installed at the same installation positions and in the same installation directions as the real sensors 9A to 9L.

An analysis of a travel result of the vehicle 2 in the simulator device 3 may be performed in, for example, either a "constant analysis" and a "post-analysis". In the "constant analysis", the vehicle 2 during the travel test is monitored, and a failure is automatically detected and output when any failure occurs. On the other hand, in the "post-analysis", control content, a travel trajectory, and the like of the vehicle 2 stored during a travel test are evaluated and then output after the end of the travel test of the vehicle 2.

Therefore, when a travel test of the vehicle 2 is to be performed, first, the evaluator 4 inputs, to the simulator device 3, particularly a type and a position of a virtual object to be arranged on a real field as a travel environment for performing the travel test of the vehicle 2. Accordingly, a travel environment for performing the travel test is generated. The "virtual object" is not limited to a three-dimensional object and includes, for example, a lane mark and a road mark. Furthermore, not only a stationary object but also a moving object may be used, and in the case of a moving object, a schedule for moving (at what speed and how to move) is also set in advance. For example, when a travel test is performed in a parking lot, a parking section line drawn on a road surface in the parking lot, another vehicle parked in a parking space, a pedestrian moving in the parking lot, another vehicle traveling through a passage in the parking lot, and the like are input as virtual objects. Thereafter, when the travel test is started, a virtual sensor mounted at the vehicle detects a virtual object created as a travel environment, and a simulation is performed to cause the vehicle to travel by automated driving assistance under the virtual travel environment. Then, a travel result is analyzed, evaluated, and output by the "constant analysis" or the "post-analysis", and when a failure occurs, the occurred failure can be specified.

However, since the virtual object arranged on the real field by the simulator device 3 is an object that does not actually exist, even if the virtual object is recognized on the vehicle side by the virtual sensor, the virtual object cannot be directly visually recognized by the evaluator 4. Since the virtual sensor is also a pseudo sensor, the virtual sensor is not actually installed on an outer wall of the vehicle and does not transmit search waves to the surroundings of the vehicle. Therefore, it is possible to confirm how the virtual sensor transmits the search waves to detect the virtual object by analyzing a result after the test, but it is difficult for the evaluator 4 to grasp the result in real time. Therefore, there is a problem that it is difficult to evaluate whether a behavior of the vehicle is an appropriate behavior from the viewpoint of the evaluator 4 because it is not clear as to how the virtual sensor transmits the search waves to detect the virtual object particularly when the "constant analysis" is performed. Therefore, the vehicle operation simulator system 1 in the present embodiment includes the following units for enabling the evaluator 4 to visually recognize a real field superimposed with an image indicating a virtual object at a position where the virtual object is arranged and superimposed with at least one of a search wave image indicating a travel state (including a case of traveling in a spreading manner and a case of traveling in a narrowing manner, the same applies hereinafter) of search waves of the virtual sensor transmitted from an assumed installation position (see Figs. 3 and 4) and a reflected wave image indicating a travel state of reflected waves when the search waves are reflected by the virtual object. Note that there are cases in which the evaluator 4 is on board the vehicle 2 as an occupant and cases in which the evaluator 4 is observing the vehicle 2 outside the vehicle, and description will be given for each case.

First, a case in which the evaluator 4 who is on board the vehicle 2 as an occupant visually recognizes a real field superimposed with the search wave image will be described as an example. Here, in the present embodiment, it is possible to visually recognize, in a selective manner, any one of a real field superimposed with only the search wave image, a real field superimposed with only the reflected wave image, and a real field superimposed with both the search wave image and the reflected wave image. For example, it is possible to switch by the evaluator 4 operating an operation unit 14 to be described later.

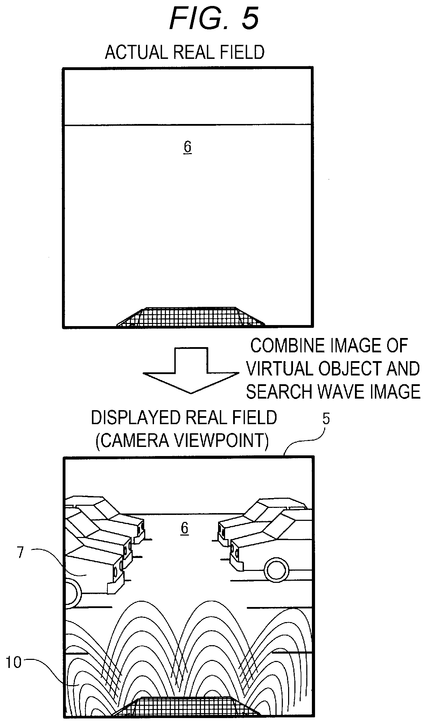

In a first example, as illustrated in Fig. 5, a real-time real scene video 6 of a real field captured by a vehicle exterior camera is displayed on an in-vehicle display 5 mounted on the vehicle 2 and visible to an occupant of the vehicle. Then, an image 7 indicating a virtual object and an image (hereinafter, referred to as a search wave image) 10 indicating a travel state of search waves transmitted from a set position of a virtual sensor (also corresponding to a position of a real sensor) are combined with the real scene video 6 of the real field displayed on the in-vehicle display 5, thereby enabling the evaluator 4 to visually recognize the real field superimposed with the image 7 indicating the virtual object at a position where the virtual object is arranged and the search wave image 10 indicating the travel state of the search waves transmitted from the virtual sensor. The simulator device 3 can specify the position of the virtual object in the real scene video 6 of the real field displayed on the in-vehicle display 5 by converting arrangement coordinates (absolute coordinates) of the virtual object set as a travel environment into coordinates of a coordinate system (relative coordinates) of a vehicle exterior camera. Further, the simulator device 3 can specify a travel direction (directivity) and a travel range (detection region) of search waves based on an installation position and an installation direction of the virtual sensor set in advance, performance of the virtual sensor, and an output intensity (for example, a burst length, a drive current, and a base gain) of the search waves. The performance of the virtual sensor follows the performance of the real sensors 9A to 9L. In the first example, the real-time real scene video 6 of the real field captured by the vehicle exterior camera (that is, a video in an optical axis direction with a position of the camera as the viewpoint) is displayed, but a bird's-eye view image or an overhead image generated by combining a plurality of camera images installed on the front, rear, and sides of the vehicle may be displayed. In addition, it is desirable that the search wave image 10 stereoscopically expresses a movement of the search waves as a three-dimensional image except for the case of displaying an overhead image.

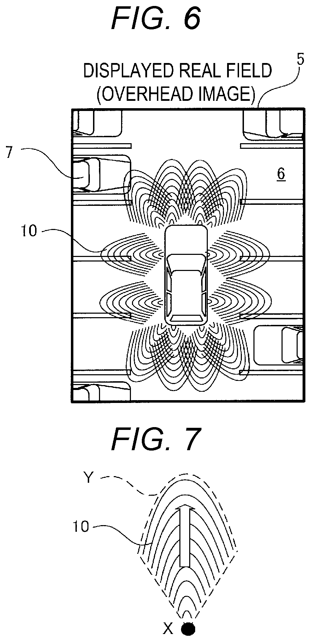

For example, Fig. 6 illustrates a second example in which an overhead image is displayed as the real-time real scene video 6, in which the overhead image in which the surroundings of the vehicle are viewed vertically downward from the sky is generated based on real-time captured images captured by a plurality of cameras respectively installed in the front, rear, and sides of the vehicle, and the generated overhead image is displayed on the in-vehicle display 5. Generation of the overhead image is well known, and thus details thereof will be omitted, and the overhead image is generated by performing viewpoint conversion on the respective captured images captured by the plurality of cameras, then combining (joining) the captured images, and further inserting an illustration image schematically illustrating the vehicle into the center of the overhead image. Similarly, the image 7 indicating a virtual object and the search wave image 10 indicating a travel state of search waves transmitted from a set position of a virtual sensor (also corresponding to a position of a real sensor) are combined with the real scene video 6 of the real field displayed on the in-vehicle display 5, thereby enabling the evaluator 4 to visually recognize the real field superimposed with the image 7 indicating the virtual object at a position where the virtual object is arranged and the search wave image 10 indicating the travel state of the search waves transmitted from the virtual sensor. In the overhead image illustrated in Fig. 6, it is possible to visually recognize an area that is particularly a blind spot from an occupant.

Next, details of the search wave image 10 indicating a travel state of the search waves transmitted from a virtual sensor will be described. As illustrated in Fig. 7, the search wave image 10 is an image for visually recognizing a travel state of the search waves traveling from an installation position X in a direction along an installation direction in a detection region Y in which a virtual object set with reference to the installation position X of the virtual sensor can be detected. As illustrated in Fig. 7, it is desirable that the search wave image 10 is a moving image in which an arc indicating the search waves continuously appears and moves in a transmission direction. As a result, a travel direction of the search waves can be grasped.

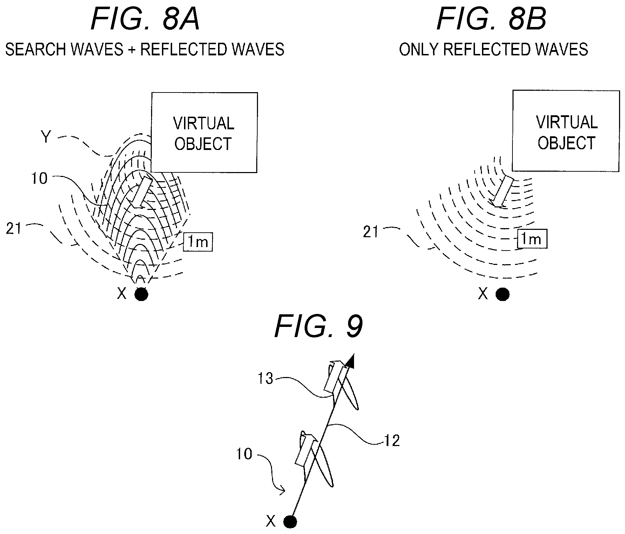

In the examples described above, although an example in which the real field superimposed with only the search wave image 10 is visually recognized by the evaluator 4, particularly in a state in which a virtual object is detected by a virtual sensor, it is possible to visually recognize a real field superimposed with only an image (hereinafter, referred to as a reflected wave image) 21 indicating a state of reflected waves (reflected search waves) when the search waves are reflected by the virtual object, or a real field superimposed with both the search wave image 10 and the reflected wave image 21. For example, Fig. 8A illustrates a real field (overhead image) superimposed with both the search wave image 10 and the reflected wave image 21, and Fig. 8B illustrates a real field (overhead image) superimposed with only the reflected wave image 21.

In a state in which a virtual object is detected as illustrated in Fig. 8A and Fig. 8B, the reflected wave image 21 indicating the reflected waves reflected by the virtual object is also visually recognized, so that a detection status of the virtual object can be visually recognized by the evaluator 4 in real time in a manner in which the detection status is superimposed on the real field. In a case where both the search wave image 10 and the reflected wave image 21 are visually recognized, it is desirable that, for example, display colors of the images are different from each other so that the search wave image 10 and the reflected wave image 21 can be identified. Further, in a state in which a virtual object is detected, a distance to the detected virtual object (for example, in the example illustrated in Fig. 8A and Fig. 8B, the virtual object is detected 1 m ahead) may be displayed.

Further, in another modification, as illustrated in Fig. 9, the search wave image 10 may display a detection axis 12 extending from the installation position X of a virtual sensor and a waveform 13 of search waves traveling in a transmission direction of the search waves along the detection axis 12.

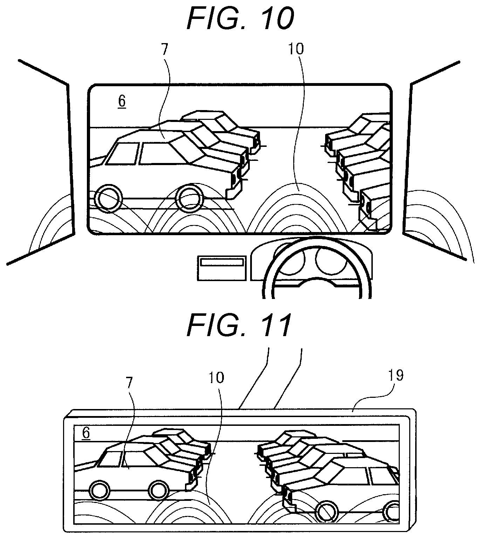

Next, in a third example, a virtual reality (VR) technique is used to enable the evaluator 4 who is an occupant of the vehicle to wear a VR headmount display 8. As illustrated in Fig. 10, the VR headmount display 8 displays the real-time real scene video 6 of a real field captured by a vehicle exterior camera outside a window in addition to a real scene video of the interior of the vehicle recorded in advance. Then, the image 7 indicating a virtual object and the search wave image 10 indicating a travel state of search waves transmitted from a set position of a virtual sensor (also corresponding to a position of a real sensor) are combined with the displayed real scene video 6 of the real field, thereby enabling the evaluator 4 to visually recognize a real field superimposed with the image 7 indicating the virtual object at a position where the virtual object is arranged and the search wave image 10 indicating the travel state of the search waves transmitted from the virtual sensor. The simulator device 3 can specify a position of a virtual object in the real scene video 6 of the real field displayed on the VR headmount display 8 by converting arrangement coordinates (absolute coordinates) of the virtual object set as a travel environment into coordinates of a coordinate system (relative coordinates) of VR (that is, the line of sight of a user). Further, the simulator device 3 can specify a travel direction (directivity) and a travel range (detection region) of search waves based on an installation position and an installation direction of the virtual sensor set in advance, performance of the virtual sensor, and an output intensity (for example, a burst length, a drive current, and a base gain) of the search waves. The performance of virtual sensors follows the performance of the real sensors 9A to 9L. In a state in which a virtual object is detected, the reflected wave image 21 may also be displayed on the VR headmount display 8 as in the example illustrated in Fig. 8.

Further, in a case where the image 7 indicating a virtual object, the search wave image 10, or the reflected wave image 21 is visually recognized by the evaluator 4 who is on board the vehicle 2 as an occupant as in the first to third examples, the image 7 indicating a virtual object, the search wave image 10, or the reflected wave image 21 may be displayed being superimposed on a real field reflected or displayed on one or both of a rearview mirror and a side mirror provided at the vehicle. That is, the image 7 indicating a virtual object is displayed being superimposed at a place where the virtual object is arranged on the real field reflected or displayed on one or both of the rearview mirror and the side mirror. Further, in a case where a detection region of a virtual sensor is included in the real field reflected or displayed on one or both of the rearview mirror and the side mirror, the search wave image 10 or the reflected wave image 21 are displayed. For example, in a case where the rearview mirror and the side mirror are of a monitor type that displays a video captured by a vehicle exterior camera, as illustrated in Fig. 11, the image 7 indicating a virtual object, the search wave image 10, and the reflected wave image 21 are combined with the real scene video 6 of the real field displayed in an image display region of the rearview mirror 19, thereby enabling the evaluator 4 to visually recognize the real field superimposed with the image 7 indicating a virtual object at a position where the virtual object is arranged, and superimposed with the search wave image 10 indicating a travel state of search waves transmitted from a virtual sensor and the reflected wave image 21 indicating a travel state of reflected waves reflected by the virtual object. On the other hand, in a case where the rearview mirror and the side mirror are of a mirror type display including a transmissive display on a mirror surface, the transmissive display displays the image 7 indicating a virtual object, the search wave image 10, and the reflected wave image 21 in a manner of superimposing on a real scene of a real field displayed on the mirror, thereby enabling the evaluator 4 to visually recognize the real field superimposed with the image 7 indicating a virtual object at a position where the virtual object is arranged, and superimposed with the search wave image 10 indicating a travel state of search waves transmitted from a virtual sensor and reflected wave image 21 indicating a travel state of reflected waves reflected by the virtual object.

In addition, as a method for enabling the evaluator 4 who is on board the vehicle 2 as an occupant to visually recognize a virtual object arranged on a real field or search waves transmitted from a virtual sensor, for example, a head-up display (HUD) may be used, or a see-through type VR headmount display may be used, in addition to the above example. Since these techniques are techniques for visual recognition by superimposing a video on a real scene outside the vehicle that is actually visually recognized through a front window or a side window, display control is performed such that an image indicating a virtual object is superimposed at a position where the virtual object is arranged, and the search wave image 10 or the reflected wave image 21 is displayed in a detection region of a virtual sensor, in a real field included in a field of view of an occupant.

Next, a case of visual recognition by the evaluator 4 who is observing a vehicle outside the vehicle will be described. For the evaluator 4 who is observing a vehicle outside the vehicle, the real-time real scene video 6 of a real field captured by a vehicle exterior camera is displayed on a display of a tablet external terminal 11 communicably connected with the simulator device 3. Details are the same as in the case of display on the in-vehicle display 5, the image 7 indicating a virtual object, the search wave image 10, and the reflected wave image 21 are combined with the real scene video 6 of a real field displayed on the external terminal 11, thereby enabling the evaluator 4 to visually recognize the real field superimposed with the image 7 indicating a virtual object at a position where the virtual object is arranged and superimposed with the search wave image 10 indicating a travel state of search waves transmitted from a virtual sensor and the reflected wave image 21 indicating a travel state of reflected waves reflected by the virtual object.

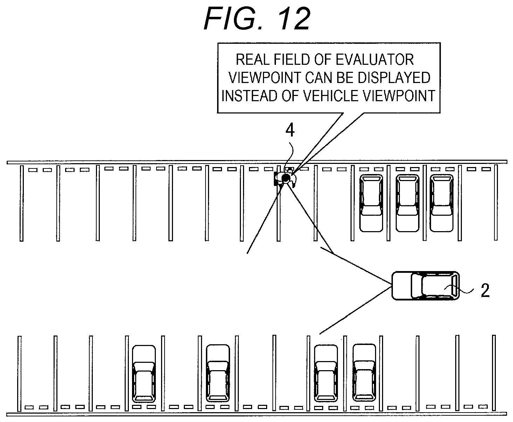

However, in particular when the real field is displayed on the external terminal 11, it is not necessary to display the real field included in a field of view with the vehicle 2 as a viewpoint, and it is also possible to display the real field included in the field of view with a position different from the vehicle 2 as a viewpoint. For example, in the case of the external terminal 11 with a camera, as illustrated in Fig. 12, the real-time real scene video 6 of a real field captured by the camera of the external terminal 11 is displayed on a display of the external terminal 11. Then, the simulator device 3 acquires optical axis information of the camera of the external terminal 11 and converts arrangement coordinates (absolute coordinates) of a virtual object set as a travel environment into coordinates of a coordinate system (relative coordinates) of the camera of the external terminal 11, thereby enabling specification of a position where the virtual object is arranged on the real field captured by the camera of the external terminal 11. Thereafter, the image 7 indicating a virtual object is combined with the real scene video 6 of the real field displayed on the display of the external terminal 11, thereby enabling the evaluator 4 to visually recognize the real field superimposed with the image 7 indicating a virtual object at the position where the virtual object is arranged. Further, the simulator device 3 can specify a travel direction (directivity) and a travel range (detection region) of search waves based on an installation position and an installation direction of a virtual sensor set in advance, performance of the virtual sensor, and an output intensity (for example, a burst length, a drive current, and a base gain) of the search waves. Thereafter, the search wave image 10 or the reflected wave image 21 is combined with the specified detection region in the real scene video 6 of the real field displayed on the display of the external terminal 11, thereby enabling the evaluator 4 to visually recognize the real field superimposed with the search wave image 10 indicating a travel state of search waves transmitted from a virtual sensor or the reflected wave image 21 indicating a travel state of reflected waves reflected by a virtual object.

The display of a real field with a position of the vehicle 2 as the viewpoint and the display of a real field with a position of the evaluator 4 as the viewpoint may be appropriately switched and displayed by the evaluator 4 operating the external terminal 11. Accordingly, it is possible to visually recognize, in real time, a real field on which a virtual object is arranged from various viewpoints in the real field instead of a fixed viewpoint. In addition to the display of a real field with the position of the vehicle 2 as the viewpoint and the display of a real field with the position of the evaluator 4 as the viewpoint, when an imaging device is installed at a real field, it is also possible to display the real field with the imaging device as the viewpoint.

In the present embodiment described above, the image 7 indicating a virtual object, the search wave image 10, and the reflected wave image 21 are displayed being superimposed on the real scene video 6 of a real field displayed on the in-vehicle display 5, the VR headmount display 8, or the external terminal 11. Alternatively, only the search wave image 10 or the reflected wave image 21 may be displayed being superimposed on the real scene video 6 without displaying the image 7 indicating a virtual object.

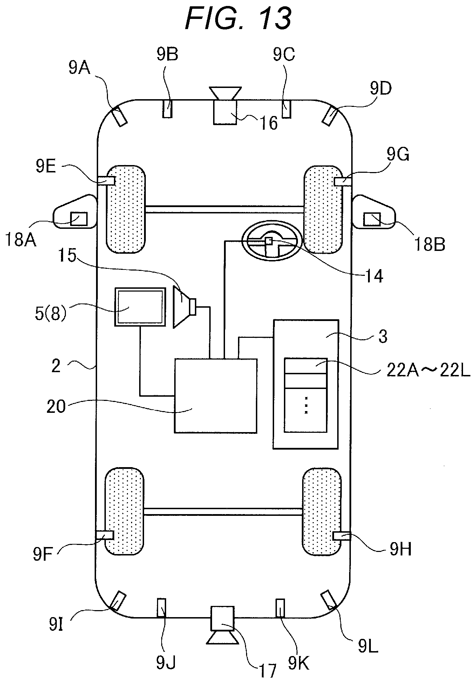

Next, the vehicle 2 mounted with an automated driving assistance system to be evaluated by the vehicle operation simulator system 1 will be described below. Fig. 13 is a schematic configuration view illustrating the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck, a bus, construction machinery for commercial use, or the like. A four-wheeled vehicle is used in the following description, but a two-wheeled or three-wheeled vehicle may be used.

The vehicle 2 is a vehicle capable of manual driving traveling in which the vehicle travels based on a driving operation of a user, and assisted traveling using automated driving assistance in which the vehicle travels automatically without a driving operation of a user.

The automated driving assistance may be performed only under a specific situation such as parking or leaving a garage, may be performed for all road sections, or may be performed only when the vehicle travels on a specific road section (for example, a highway with a gate (manned or unmanned, paid or free) at a boundary). In the following description, an automated driving section in which the automated driving assistance of a vehicle is performed includes a parking lot in addition to all road sections including general roads and highways. The automated driving assistance is performed only in a situation in which a user selects the automated driving assistance (for example, turning on an automated driving start button) and it is determined that traveling by the automated driving assistance is possible. On the other hand, the vehicle 2 may be a vehicle that can only perform assisted traveling by the automated driving assistance. Alternatively, the vehicle 2 may perform assisted traveling by the automated driving assistance only for traveling to a parking space when the vehicle is to be parked (that is, parking assistance).

In vehicle control in the automated driving assistance according to the present embodiment, for example, a current position of the vehicle, a lane in which the vehicle travels, and positions of surrounding obstacles are detected at any time, and vehicle control of a steering wheel, a drive source, and a brake is automatically performed such that the vehicle travels along a generated travel trajectory at a speed according to a similarly generated speed plan. In particular, when parking assistance is performed, the vehicle control is automatically performed in which the parking space, which is a target into which the vehicle is to be parked, and a surrounding situation are confirmed using a detection result of a sensor or a camera, a parking trajectory to the parking space is calculated, the vehicle enters the parking space along the calculated parking trajectory, and the parking is completed.

As illustrated in Fig. 13, the vehicle 2 includes the operation unit 14 that receives an operation from an occupant, the in-vehicle display 5 (or the VR headmount display 8) that displays, for an occupant, the real scene video 6 (Fig. 5) of a real field described above and other output information from the simulator device 3, a speaker 15 that outputs voice guidance from the simulator device 3, a front camera 16, a rear camera 17, and side cameras 18A and 18B, which capture images of the surroundings of the vehicle, the real sensors 9A to 9L that detect obstacles around the vehicle, a driving assistance electronic control unit (ECU) 20 that is a control unit for performing various types of calculation processing related to automated driving assistance based on input information, and the simulator device 3 described above.

Hereinafter, the components provided in the vehicle 2 will be described. First, the operation unit 14 is disposed, for example, on a front surface of a handle (steering wheel) and includes operation buttons that are operated when the automated driving assistance is started. By operating the operation unit 14, a user can switch between manual driving traveling in which a vehicle travels based on a driving operation of a user and assisted traveling by automated driving assistance in which the vehicle automatically travels without a driving operation of a user. The operation unit 14 may include a touch panel provided on a front surface of an in-vehicle display. A microphone and a voice recognition device may be further provided.

The in-vehicle display 5 is a type of display device, is provided on an instrument panel of the vehicle 2, and displays the real scene video 6 (Fig. 5) of a real field superimposed with the image 7 indicating a virtual object at a position where the virtual object is arranged as described above, and the search wave image 10 indicating a travel state of search waves transmitted from a virtual sensor or the reflected wave image 21 indicating a travel state of reflected waves when the search waves are reflected by a virtual object. The VR headmount display 8 may be provided instead of the in-vehicle display 5 as described above. Further, a display device (Fig. 11) that displays the real scene video 6 of the real field superimposed with the image 7 indicating a virtual object, the search wave image 10, or the reflected wave image 21 on the rearview mirror and the side mirror as described above may be provided. The real scene video 6 of the real field displayed on the in-vehicle display 5 or the VR headmount display 8 is a video obtained by combining the image 7 indicating a virtual object, the search wave image 10, or the reflected wave image 21 described above with real-time videos captured by the front camera 16, the rear camera 17, and the side cameras 18A and 18B.

The speaker 15 is provided on an instrument panel of the vehicle 2 and outputs a guidance voice or a warning sound from the simulator device 3.

The front camera 16 is, for example, an imaging device including a camera using a solid-state imaging element such as a CCD and is provided, for example, above a front bumper of the vehicle 2 or on a back side of a rearview mirror with an optical axis direction thereof being directed to the front in a travel direction of the vehicle.

The rear camera 17 is also an imaging device including a camera using a solid-state imaging element such as a CCD in the same manner, and is mounted, for example, in the vicinity of an upper center of a license plate attached to the rear of the vehicle 2 with an optical axis direction thereof being directed to the rear of the vehicle.

Further, the side cameras 18A and 18B are also imaging devices each including a camera using a solid-state imaging element such as a CCD in the same manner, and are attached to, for example, left and right side mirrors of the vehicle 2 with optical axis directions thereof being directed to lateral sides of the vehicle.

The simulator device 3 reads information on a type and an installation position of a virtual object in a travel environment set in advance by the evaluator 4, and combines the image 7 indicating a virtual object at a position where the virtual object is arranged with images captured by the front camera 16, the rear camera 17, and the side cameras 18A and 18B to generate the real scene video 6 of the real field displayed on the in-vehicle display 5 or the VR headmount display 8. The simulator device 3 specifies a travel direction (directivity) and a travel range (detection region) of search waves based on an installation position and an installation direction of a virtual sensor set in advance by the evaluator 4, performance of the virtual sensor, and an output intensity (for example, a burst length, a drive current, and a base gain) of the search waves, and as described above, the simulator device 3 combines the search wave image 10 or the reflected wave image 21 in a detection region of a virtual sensor with the images captured by the front camera 16, the rear camera 17, and the side cameras 18A and 18B. A real scene video to be combined with the image 7 indicating a virtual object and the search wave image 10 may be a real scene video itself captured by each of the front camera 16, the rear camera 17, and the side cameras 18A and 18B, or may be, for example, a video obtained by combining videos captured by a plurality of cameras or by converting the viewpoint (for example, an overhead image or a bird's-eye view image).

On the other hand, the real sensors 9A to 9L are distance measurement sensors for detecting an object existing around the vehicle, and are, for example, ultrasonic sensors. Related to the real sensors 9A to 9L, there are virtual sensors 22A to 22L that cannot detect a real target object but can detect a virtual object, which will be described later, and the virtual sensors 22A to 22L are also mounted on the vehicle 2 in the same manner. The real sensors 9A to 9L are disposed at predetermined intervals on a front portion, a rear portion, and side portions of the vehicle as described above, and transmit ultrasonic waves serving as search waves to the surroundings of the vehicle 2 and receive reflected waves of the transmitted search waves reflected by an object around the vehicle, thereby detecting the object that reflects the search waves (Fig. 3 and Fig. 4).

The driving assistance ECU 20 is an electronic control unit that performs various types of processing related to the automated driving assistance. The driving assistance ECU 20 is connected to various sensors for detecting behaviors of the vehicle, such as a vehicle speed sensor, a wheel speed sensor, an acceleration sensor, a gyro sensor, a steering sensor, and a shift position sensor, and drive units of the vehicle, such as a steering wheel, a brake, an accelerator, and a transmission. A current behavior of the vehicle is detected based on detection results of these sensors, and control information (control amount) for controlling the drive units are calculated so that the automated driving assistance of the vehicle 2 is performed by controlling the drive units. As specific contents of the automated driving assistance, for example, a current position of the vehicle, a lane in which the vehicle travels, and positions of surrounding obstacles are detected at any time, and vehicle control of a steering wheel, a drive source, and a brake is performed such that the vehicle travels along a generated travel trajectory at a speed according to a similarly generated speed plan. In particular, when parking assistance is performed, the vehicle control is performed in which a parking space, which is a target into which the vehicle is to be parked, and a surrounding situation are confirmed, a parking trajectory to the parking space is calculated, the vehicle enters the parking space along the calculated parking trajectory, and the parking is completed.

Here, a method for acquiring detection information of the real sensors 9A to 9L and a method for acquiring detection information of the virtual sensors 22A to 22L are provided as a method for acquiring information on surrounding obstacles and a parking space necessary for the driving assistance ECU 20 to perform the automated driving assistance. The real sensors 9A to 9L are sensors for detecting an object actually existing around the vehicle, while the virtual sensors 22A to 22L are sensors for detecting a virtual object in a travel environment virtually generated by the simulator device 3. The virtual sensors 22A to 22L are parts of the simulator device 3 and are mounted on the vehicle 2.

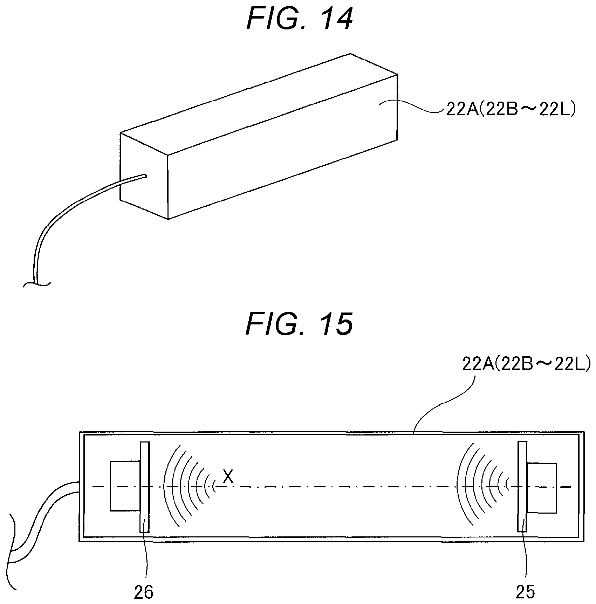

Here, Fig. 14 is an appearance view illustrating the virtual sensors 22A to 22L provided in the simulator device 3, and Fig. 15 is a view illustrating an internal structure of the virtual sensors 22A to 22L. The virtual sensors 22A to 22L basically have the same structure, and the virtual sensor 22A will be described below as an example.

As illustrated in Figs. 14 and 15, the virtual sensor 22A has a rectangular parallelepiped box shape, and includes a first ultrasonic sensor 25 at one end inside the box and a second ultrasonic sensor 26 at the other end. The first ultrasonic sensor 25 and the second ultrasonic sensor 26 basically have the same structure as the above-described real sensors 9A to 9L, and are disposed to face each other such that detection axes X are coaxial. The detection axis X is a virtual straight line extending along transmission and reception directions of search waves from the first ultrasonic sensor 25 and the second ultrasonic sensor 26. Each of the first ultrasonic sensor 25 and the second ultrasonic sensor 26 has a piezoelectric vibrator (for example, a ceramic plate) for transmitting and receiving search waves. The piezoelectric vibrator is formed in a planar shape having the detection axis X as a normal line. The first ultrasonic sensor 25 and the second ultrasonic sensor 26 are configured to transmit search waves along the detection axis X by ultrasonically vibrating the piezoelectric vibrator based on a drive signal applied to an electromechanical transducer. In addition, the first ultrasonic sensor 25 and the second ultrasonic sensor 26 are configured to generate a reception signal, which is an electric signal corresponding to an excitation state of the piezoelectric vibrator due to the received ultrasonic waves, in the electromechanical transducer when receiving a reception wave from the outside.

Then, the virtual sensor 22A detects that the first ultrasonic sensor 25 received reflected waves when an electromotive force generated by the vibration of the piezoelectric vibrator accompanying the reception of the search waves exceeds a threshold, and calculates a distance to an object based on a time from the transmission of the search waves to the reception of the search waves by the first ultrasonic sensor 25. However, the object here is a virtual object, and the first ultrasonic sensor 25 does not actually transmit the search waves, but recognizes and receives the search waves transmitted from the second ultrasonic sensor 26 as reflected waves on the assumption that the search waves are transmitted. In this case, a distance measurement value detected by the virtual sensor 22A can be freely controlled based on a timing at which the search waves are transmitted from the second ultrasonic sensor 26.

That is, the simulator device 3 specifies a current position and orientation of a vehicle based on information from each sensor such as a vehicle speed sensor, a wheel speed sensor, an acceleration sensor, a gyro sensor, a steering sensor, and a shift position sensor installed in the vehicle, and specifies a position of the virtual object relative to the vehicle 2 based on the specified current position and orientation of the vehicle and a position of the virtual object arranged in a travel environment set by the evaluator 4 in advance. Then, based on the specified position of the virtual object relative to the vehicle 2 (more specifically, the real sensors 9A to 9L provided in the vehicle), a timing at which search waves are transmitted from the second ultrasonic sensor 26 is controlled, and accordingly the virtual sensors 22A to 22L detect the virtual object that does not exist actually. That is, the virtual sensors 22A to 22L can detect the virtual object by pseudo-simulating transmission of search waves from installation positions to the surroundings of the vehicle 2 and reception of reflected waves of the search waves reflected by the virtual object around the vehicle 2.

In the vehicle operation simulator system 1 according to the present embodiment, while the travel test is performed (while a travel result is collected), the driving assistance ECU 20 detects surrounding obstacles and parking spaces based on the detection information of the virtual sensors 22A to 22L, and performs vehicle control of a steering wheel, a drive source, a brake, and the like. On the other hand, in a preparation stage before the travel test is performed (a preparation stage before the travel result is collected) or after the travel test (after the collection of the travel result is completed), since it is necessary to cause the vehicle to travel while avoiding an actual wall or obstacle, the driving assistance ECU 20 detects surrounding obstacles and parking spaces based on detection information of the real sensors 9A to 9L and performs vehicle control of a steering wheel, a drive source, a brake, and the like. Sensor information input to the driving assistance ECU 20 is switched by a switch or the like.

The virtual sensors 22A to 22L are provided by the same number as the real sensors 9A to 9L, and the virtual sensor 22A corresponds to the real sensor 9A. That is, the driving assistance ECU 20 recognizes that the virtual sensor 22A is the real sensor 9A during the travel test, and detects an object (a virtual object that does not actually exist) on a left front side of the vehicle. For example, when a distance from the real sensor 9A to the virtual object is 1 m, a timing of transmitting search waves from the second ultrasonic sensor 26 is controlled such that a distance measurement value detected by the virtual sensor 22A is 1 m. Accordingly, it is detected that an object (actually, a virtual object) is present at a position of 1 m from the real sensor 9A. Similarly, the virtual sensor 22B corresponds to the real sensor 9B, the virtual sensor 22C corresponds to the real sensor 9C, and the virtual sensor 22D corresponds to the real sensor 9D. The same applies to the remaining virtual sensors 22E to 22L.

In addition to the components illustrated in Fig. 13, the vehicle 2 includes basic components as the vehicle 2. However, only a configuration related to control of the automated driving assistance and control related to the configuration will be described.

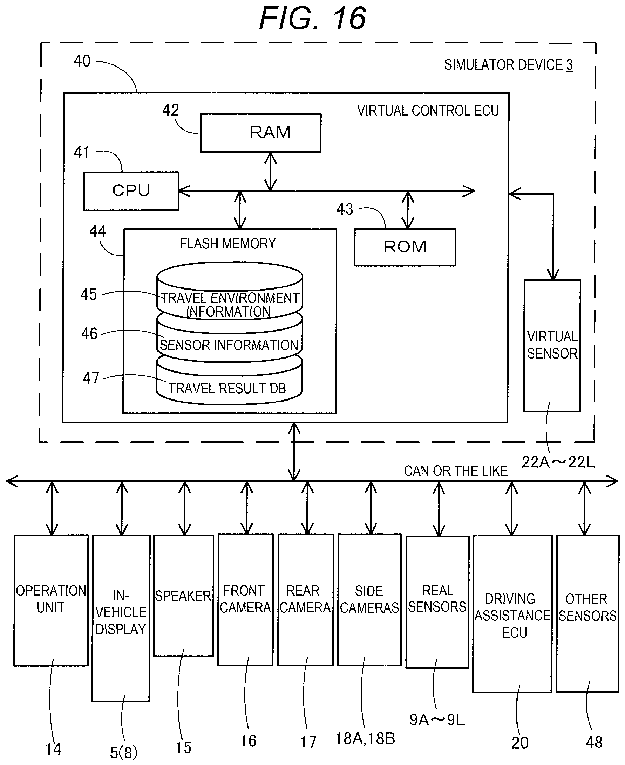

Next, details of the simulator device 3 provided in the vehicle operation simulator system 1 will be described. Fig. 16 is a block diagram illustrating a configuration of the simulator device 3 according to the present embodiment.

As illustrated in Fig. 16, the simulator device 3 includes a virtual control electronic control unit (ECU) 40, which is a control unit that executes various kinds of calculation processing such as creation of a travel environment when a travel test is to be performed, control of the virtual sensors 22A to 22L, analysis, evaluation, and output of an operation result of the travel test of the vehicle 2, and the virtual sensors 22A to 22L described above.

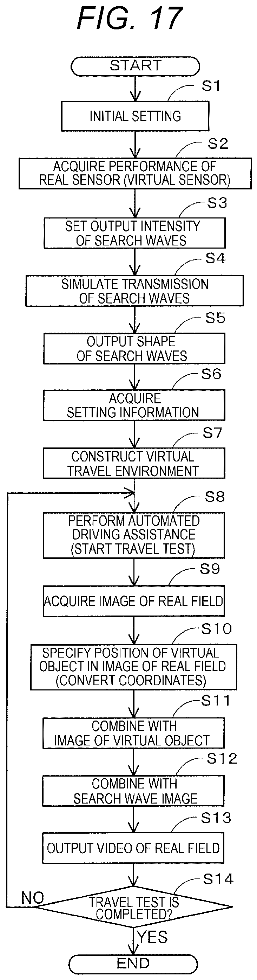

The virtual control ECU 40 is an electronic control unit that controls the entire simulator device 3. The virtual control ECU 40 includes a CPU 41 serving as a calculation device and a control device, and internal storage devices such as a RAM 42 used as a working memory when the CPU 41 executes various kinds of calculation processing, a ROM 43 that stores a control program, an operation evaluation program (see Fig. 17) to be described later, and the like, and a flash memory 44 that stores a program read from the ROM 43. The virtual control ECU 40 includes various units as a processing algorithm together with the driving assistance ECU 20 described above. For example, a virtual object arrangement unit arranges a virtual object on a real field. A virtual object detection unit detects a virtual object by, using the virtual sensors 22A to 22L assumed to be installed at predetermined installation positions in predetermined installation directions in the vehicle, pseudo-simulating transmission of search waves to the surroundings of the vehicle from the installation positions along the installation directions and reception of reflected waves of the search waves reflected by the virtual object around the vehicle. An image visual recognition unit causes a real field be be visually recognized, the real field being superimposed with at least one of the search wave image 10 indicating a travel state of the search waves transmitted from the virtual sensors 22A to 22L and the reflected wave image 21 indicating a travel state of the reflected waves when the search waves are reflected by a virtual object. That is, the virtual control ECU 40 is an example of the virtual object arrangement unit, the virtual object detection unit, and the image visual recognition unit.

The virtual control ECU 40 is connected, via an in-vehicle network such as a CAN, to various sensors 48 for detecting a behavior of the vehicle, such as a vehicle speed sensor, a wheel speed sensor, an acceleration sensor, a gyro sensor, a steering sensor, and a shift position sensor, in addition to the operation unit 14, the in-vehicle display 5 (or the VR headmount display 8), the speaker 15, the front camera 16, the rear camera 17, the side cameras 18A and 18B, the real sensors 9A to 9L, and the driving assistance ECU 20 described above. The virtual control ECU 40 can detect a current position, an orientation, and a current behavior of the vehicle based on detection results of the sensors 48. The virtual control ECU 40 provides the vehicle 2 with a virtual travel environment that is a travel environment for a travel test, and can acquire, analyze, evaluate, and output an operation result of the automated driving assistance system based on behaviors of the vehicle during the travel test. Further, similarly, the real scene video 6 (Figs. 5, 6, 10, and 11) of a real field displayed on the in-vehicle display 5, the VR headmount display 8, or the external terminal 11 described above is created based on the behaviors of the vehicle during the travel test, and the video is output to these display devices.

The flash memory 44 includes travel environment information 45, sensor information 46, and a travel result DB 47. The travel environment information 45 stores a travel environment for performing a travel test on the vehicle 2, which is set in advance by the evaluator 4. Specifically, a type and a position of a virtual object to be arranged on a real field are input in advance by the evaluator 4. Note that a plurality of patterns of the travel environment may be stored in advance.

Further, the sensor information 46 stores various types of information related to the real sensors 9A to 9L installed at the vehicle 2, such as an installation position, an installation direction, and sensor performance. Installation positions, installation directions, and sensor performance of the virtual sensors follow the real sensors 9A to 9L, and the simulator device 3 creates the search wave image 10 superimposed on the real field based on the sensor information 46, which will be described later.

The travel result DB 47 is a storage unit for cumulatively storing control content of the vehicle and a travel trajectory and a behavior history of the vehicle during a travel test. Then, the simulator device 3 evaluates and outputs the control content, the travel trajectory, and the like of the vehicle 2 stored in the travel result DB 47 after a travel test operation of the vehicle 2 is completed.

Next, an operation evaluation program executed in the simulator device 3 of the vehicle operation simulator system 1 having the above configuration will be described with reference to Fig. 17. Fig. 17 is a flowchart illustrating the operation evaluation program according to the present embodiment. Here, the operation evaluation program is a program that is executed when an activation operation of a corresponding program is received in the simulator device 3, constructs a virtual travel environment, and performs quality evaluation of the automated driving assistance system provided in the vehicle based on a result of the travel test. The activation operation of the program may be triggered by, for example, an operation of the operation unit 14 by the evaluator 4 who is on board the vehicle as an occupant, or may be started by the evaluator 4 outside the vehicle performing a predetermined operation on the external terminal 11. The program illustrated in the flowchart in Fig. 17 is stored in the RAM 42 or the ROM 43 provided in the simulator device 3 and is executed by the CPU 41.

First, in step (hereinafter abbreviated as S) 1, the CPU 41 of the simulator device 3 executes various kinds of initial setting processing before a travel test is executed. For example, the CPU 41 confirms operations of the virtual sensors 22A to 22L.

Subsequently, in S2, the CPU 41 acquires sensor performance (specifications) of the real sensors 9A to 9L. The sensor performance is stored in the flash memory 44 in advance. The sensor performance of the real sensors 9A to 9L also corresponds to the sensor performance of the virtual sensors.

Next, in S3, the CPU 41 sets an output intensity of search waves in each virtual sensor.

Thereafter, in S4, the CPU 41 performs a sound wave analysis simulation of the search waves output from the virtual sensor based on the sensor performance of the real sensors 9A to 9L acquired in S2 and the output intensity of the search waves set in S3. That is, when the virtual sensors having the same performance as the real sensors 9A to 9L output search waves at the set output intensity, how the search waves actually travel is simulated.

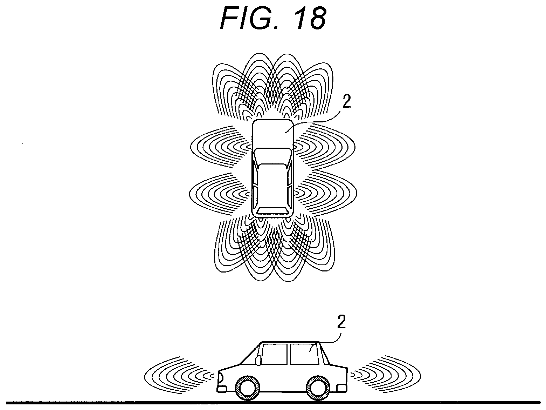

Next, in S5, based on a result of the sound wave analysis simulation in S4, the CPU 41 specifies in which direction (directivity) and how the search waves travel (detection region) with respect to the installation positions and the installation directions of the virtual sensors. The installation positions and the installation directions of the virtual sensors follow the installation positions and the installation directions of the real sensors 9A to 9L that are actually mounted at the vehicle 2. As a result, as illustrated in Fig. 18, it is possible to specify a travel direction (directivity) and a travel range (detection region) of the search waves transmitted from the virtual sensors assumed to be installed at the same installation positions and installation directions as the real sensors 9A to 9L.

Subsequently, in S6, the CPU 41 reads setting information of a travel environment for performing a travel test on the vehicle 2 from the flash memory 44. The travel environment includes, for example, a type and a position of a virtual object to be arranged on a real field.

Here, the travel environment is basically set and stored in advance in the simulator device 3 by an input operation from the evaluator 4. A plurality of travel environments can be set, and in this case, it is possible to freely select a travel environment to be used for a current travel test. As the travel environment, for example, traveling on a public road can be set, or traveling in a parking lot can be set. The "virtual object" is not limited to a three-dimensional object and includes, for example, a lane mark and a road mark. For example, when a travel test is performed in a parking lot, a parking section line drawn on a road surface in the parking lot, another vehicle parked in a parking space, a pedestrian moving in the parking lot, another vehicle traveling through a passage in the parking lot, and the like are set as virtual objects. Further, a movement schedule (at what speed and in what way the virtual object moves) is set for a moving virtual object.

Subsequently, in S7, the CPU 41 constructs a virtual travel environment for a real field on which the vehicle is currently located based on the setting information read in S6. That is, a virtual object of the set type is arranged at the set position on the real field. A moving virtual object, the moving object is moved according to a set schedule thereafter.

Thereafter, in S8, the CPU 41 starts the travel test on the vehicle 2. When the travel test is started, vehicle control by the automated driving assistance is started in the vehicle 2, for example, a current position of the vehicle, a lane in which the vehicle travels, and positions of surrounding obstacles are detected at any time, and vehicle control of a steering wheel, a drive source, and a brake is automatically performed such that the vehicle travels on the real field along a generated travel trajectory at a speed according to a similarly generated speed plan. In particular, in the case of evaluating parking assistance in which a parking lot is set as a travel environment, the vehicle control is automatically performed in which a parking space, which is a target into which the vehicle is to be parked, and a surrounding situation are confirmed using detection information of a sensor, a parking trajectory to the parking space is calculated, the vehicle enters the parking space along the calculated parking trajectory, and the parking is completed.

While the vehicle travels by the automated driving assistance, the CPU 41 of the simulator device 3 outputs a detection result obtained by the vehicle 2 traveling on the real field detecting a virtual object using the virtual sensors 22A to 22L, to the driving assistance ECU 20 that controls the automated driving assistance on the vehicle 2 side. Specifically, the CPU 41 specifies a current position and orientation of the vehicle based on information from the sensors 48 such as a vehicle speed sensor, a wheel speed sensor, an acceleration sensor, a gyro sensor, a steering sensor, and a shift position sensor installed in the vehicle, and specifies a position of the virtual object relative to the vehicle 2 based on the specified current position and orientation of the vehicle and a position of the virtual object arranged in the travel environment constructed in S7. Then, based on the specified position of the virtual object relative to the vehicle 2 (more specifically, the real sensors 9A to 9L provided in the vehicle), a timing at which search waves are transmitted from the second ultrasonic sensor 26 provided in each of the virtual sensors 22A to 22L is controlled, and accordingly, the virtual sensors 22A to 22L detect the virtual object that does not exist actually.

Next, in S9, the CPU 41 acquires a real-time real scene video of the real field to be displayed on the in-vehicle display 5, the VR headmount display 8, or the external terminal 11 based on images captured by the front camera 16, the rear camera 17, and the side cameras 18A and 18B. The real scene video may be a real scene video itself captured by each of the front camera 16, the rear camera 17, and the side cameras 18A and 18B, or may be, for example, a video obtained by combining videos captured by a plurality of cameras or by converting the viewpoint (for example, an overhead image or a bird's-eye view image).

The real-time real scene video of the real field to be displayed on the external terminal 11 may be a video captured by a camera provided in the external terminal 11 instead of a video captured by a camera of the vehicle 2, or may be a video captured by another camera disposed on the real field. The following processing is executed for each frame of the video acquired in S9.

Subsequently, in S10, the CPU 41 specifies a position of the virtual object in the real scene video of the real field acquired in S9 by converting arrangement coordinates (absolute coordinates) of the virtual object in the travel environment constructed in S7 into coordinates in a coordinate system (relative coordinates) of the real scene video of the real field acquired in S9. For example, when the real scene video of the real field captured by the front camera 16 is displayed on the in-vehicle display 5, the CPU 41 can specify the position of the virtual object in the real scene video of the real field displayed on the in-vehicle display 5 by converting the arrangement coordinates (absolute coordinates) of the virtual object into coordinates of a coordinate system (relative coordinates) of the front camera 16. On the other hand, when VR display is performed by the VR headmount display 8, the CPU 41 can specify the position of the virtual object in the real scene video of the real field displayed on the VR headmount display 8 by converting the arrangement coordinates (absolute coordinates) of the virtual object into coordinates of a coordinate system (relative coordinates) of VR (that is, the line of sight of a user).

Thereafter, in S11, the CPU 41 combines the image 7 indicating the virtual object at the position specified in S10 with the real scene video of the real field acquired in S9. As the image 7 indicating the virtual object, for example, a 3D model image is stored in the flash memory 44 in advance for each type of virtual object such as a vehicle or a person. Then, the CPU 41 reads the model image of a corresponding type from the flash memory 44, performs rotation and scaling in accordance with the virtual object arranged on the real field, and combines the model image with the real scene video. For a virtual object having a direction such as a vehicle, the direction is also combined according to the constructed travel environment. It is desirable to perform texture mapping in which a texture image is attached to a surface of the model image, and to draw an effect of the texture image so as not to be unnatural in consideration of an arrangement direction, surrounding brightness, a position of a light source (for example, sunlight or street light), and the like when the model image is arranged on a real field. The model image to be combined may be an opaque image having a transmittance of 0% or a translucent image.

Thereafter, in S12, the CPU 41 combines the real scene video of the real field acquired in S9 with the search wave image 10 indicating a travel state of the search waves transmitted from the positions of the virtual sensor (also corresponding to the positions of the real sensors), based on the travel direction (directivity) and the travel range (detection region) of the search waves specified in S5. As described above, the search wave image 10 is an image for visually recognizing a travel state of the search waves traveling from the installation positions in directions along the installation directions in a detection region in which the virtual object set with reference to the installation positions of the virtual sensors can be detected (Fig. 7). As described above, in the present embodiment, it is possible to visually recognize, in a selective manner, any one of a real field superimposed with only the search wave image 10, a real field superimposed with only the reflected wave image 21, and a real field superimposed with both the search wave image 10 and the reflected wave image 21. For example, it is possible to switch by the evaluator 4 operating the operation unit 14.

When the reflected wave image 21 is combined with the real scene video of the real field in S12, first, the CPU 41 specifies in which range and in which direction (directivity) the search waves after being reflected (reflected waves) by the virtual object travel based on the travel direction (directivity) and the travel range (detection region) of the search waves specified in S5 and the position of the virtual object on the real field, and then combines the reflected wave image 21 indicating the travel state of the reflected waves with the specified range. Accordingly, it is possible to visually recognize the real field superimposed with the reflected wave image 21.

Next, in S13, the CPU 41 outputs a real-time real scene video of the real field obtained by combining the image 7 indicating the virtual object and the search wave image 10 or the reflected wave image 21 to the in-vehicle display 5, the VR headmount display 8, or the external terminal 11, and displays the video on each display device. As a result, the evaluator 4 can visually recognize the real field superimposed with the image 7 indicating the virtual object at the position where the virtual object is arranged, and superimposed with the search wave image 10 indicating a travel state of search waves transmitted from a virtual sensor or the reflected wave image 21 indicating a travel state of reflected waves (Figs. 5, 6, 8, and 10). Further, the real scene video of the real field superimposed with the image 7 indicating a virtual object, the search wave image 10, or the reflected wave image 21 may be displayed on the rearview mirror and the side mirrors as described above (Fig. 11).

Subsequently, in S14, the CPU 41 determines whether the travel test is completed. For example, in a case where parking assistance is evaluated with a parking lot as a travel environment, it is determined that the travel test is completed when the vehicle is parked in a parking space and a shift position becomes P. On the other hand, the travel test may be completed on a condition that the vehicle travels a predetermined distance or travels for a predetermined time after the travel test is started.

When it is determined that the travel test is completed (S14: YES), the operation evaluation program ends. On the other hand, when it is determined that the travel test is not completed (S14: NO), the processing returns to S8, and the travel test of the vehicle 2 continues.

An analysis of a travel result of the vehicle 2 when the travel test of the vehicle is performed by the operation evaluation program may be performed in, for example, either the "constant analysis" and the "post-analysis". In the "constant analysis", the vehicle 2 during the travel test is monitored, and a failure is automatically detected and output when any failure occurs. On the other hand, in the "post-analysis", control content, a travel trajectory, and the like of the vehicle 2 stored during the travel test are evaluated and then output based on detection content of the virtual sensors 22A to 22L after the end of the travel test of the vehicle 2.

The CPU 41 may output, to an external display, an evaluation window recording content of a failure that occurs after the travel test. The content of the failure and a time when the failure occurs are displayed on the evaluation window. As a result, the evaluator 4 can grasp what kind of failure occurs at which timing in the automated driving assistance system. Further, the CPU 41 may be configured to leave the real scene video (including the image 7 of the virtual object and the search wave image 10) of the real field output in S13 as an image log, extract, from the image log, an image output when it is determined that a failure occurs in an operation of the automated driving assistance system, and allow the evaluator 4 to view the image. The evaluator 4 can perform program modification or the like of the automated driving assistance system based on an output result of the travel test.

As described above in detail, according to the vehicle operation simulator system 1 and a computer program executed by the vehicle operation simulator system 1 in the present embodiment, a virtual object is arranged on a real field (S7), and a travel result when the vehicle 2 including the virtual sensors 22A to 22L for detecting the virtual object travels on the real field is collected. The virtual sensors 22A to 22L are assumed to be installed in predetermined installation directions at predetermined installation positions in the vehicle following the real sensors 9A to 9L, and detect the virtual object by pseudo-simulating transmission of search waves from the installation positions to the surroundings of the vehicle and reception of reflected waves of the search waves reflected by the virtual object around the vehicle. The real field superimposed with at least one of the search wave image 10 indicating a travel state of the search waves transmitted from the virtual sensors 22A to 22L and the reflected wave image 21 indicating a travel state of the reflected waves when the search waves are reflected by the virtual object is visually recognized (S13). Therefore, in a travel test of the vehicle performed by arranging the virtual object on the real field, an occupant or an observer can visually recognize, in real time, a detection range or a detection status of the virtual object detected by the virtual sensors in a manner of overlapping the detection range or the detection status on the real field. As a result, it is clear how the virtual sensor transmits the search waves and receives the reflected waves to detect the virtual object, and it is also possible to evaluate, by eyes of a person, whether a behavior of the vehicle is an appropriate behavior with respect to a detection result of the virtual object.

Since it is possible to visually recognize, in a selective manner, any one of a real field superimposed with only the search wave image 10, a real field superimposed with only the reflected wave image 21, and a real field superimposed with both the search wave image 10 and the reflected wave image 21, it is possible to distinguish and visually recognize the search waves and the reflected waves, and it is possible to visually recognize a detection status of the virtual object detected by each virtual sensor more clearly.

In another example of the search wave image 10 (Fig. 9), since a waveform of the search waves traveling in a transmission direction of the search waves along a detection axis is visually recognized together with a detection axis of each virtual sensor, an occupant or an observer can visually recognize, in real time, a detection range or a detection status of the virtual object detected by the virtual sensor in a manner of superimposing the detection range or the detection status on the real field according to the displayed detection axis and waveform.

Since the virtual sensor is set with a detection region in which the virtual object can be detected with reference to the installation position and the search wave image 10 enables visual recognition of a travel state of the search waves traveling from the installation position in a direction along the installation direction in the detection region, an occupant or an observer can visually recognize, in real time, a detection range or a detection status of the virtual object detected by the virtual sensor in a manner of overlapping the detection range or the detection region on the real field.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, the image 7 indicating a virtual object and the search wave image 10 are displayed being superimposed on the real scene video 6 of a real field displayed on the in-vehicle display 5, the VR headmount display 8, or the external terminal 11. Alternatively, only the search wave image 10 may be displayed being superimposed on the real scene video 6 without displaying the image indicating the virtual object.

In the present embodiment, the real scene video 6 (including the image 7 of the virtual object, the search wave image 10, and the reflected wave image 21) of the real field displayed on the in-vehicle display 5 or the external terminal 11 is a real scene video in real time. Alternatively, the real scene video 6 may be a past real scene video captured by a camera. In this case, the evaluator 4 can confirm how the virtual sensor transmits the search waves and detects the virtual object after a travel test operation of the vehicle 2 is completed. In addition, the real scene video 6 of the real field may be displayed on the in-vehicle display 5 or the external terminal 11 not only when the vehicle is traveling but also when the vehicle is stopped.

In the present embodiment, an evaluation target of quality evaluation in the travel test is the automated driving assistance system that assists an occupant in driving of the vehicle by executing a part or all of driving operations of the occupant on the vehicle side. Alternatively, various vehicle control systems other than the automated driving assistance system can be the evaluation target. For example, an automated brake system for approaching an obstacle can be evaluated.

The search wave image 10 according to the present embodiment is an image illustrating a travel direction (directivity) and a travel range (detection region) of the search waves transmitted from the virtual sensor. Alternatively, the search wave image 10 may be an image illustrating only one of the travel direction and the travel range. The same applies to the reflected wave image 21.

In the present embodiment, an execution subject of the operation evaluation program illustrated in Fig. 17 is the simulator device 3 mounted at the vehicle. Alternatively, the simulator device 3 may be provided outside the vehicle. In this case, the simulator device 3 and the vehicle 2 can communicate with each other by wireless communication.

## Claims

1. A vehicle operation simulator system (1) comprising:
a virtual object arrangement unit (40) configured to arrange a virtual object on a real field;
a virtual object detection unit (40) configured to detect the virtual object by, using a virtual sensor (22A to 22L) assumed to be installed at a predetermined installation position in a predetermined installation direction in a vehicle (2), pseudo-simulating transmission of a search wave from the installation position to surroundings of the vehicle along the installation direction and reception of a reflected wave of the search wave reflected by the virtual object around the vehicle; and
an image visual recognition unit (40) configured to cause the real field to be visually recognized, the real field being superimposed with at least one of a search wave image (10) indicating a travel state of the search wave transmitted from the virtual sensor and a reflected wave image (21) indicating a travel state of the reflected wave when the search wave is reflected by the virtual object.

2. The vehicle operation simulator system according to claim 1, wherein
the image visual recognition unit selectively causes one of the real field superimposed with only the search wave image, the real field superimposed with only the reflected wave image, and the real field superimposed with both the search wave image and the reflected wave image to be visually recognized.

3. The vehicle operation simulator system according to claim 1 or 2, wherein
the image visual recognition unit causes a detection axis of the virtual sensor and a waveform of the search wave traveling in a transmission direction of the search wave along the detection axis to be visually recognized as the search wave image.

4. The vehicle operation simulator system according to claim 1 or 2, wherein
the virtual sensor is set with a detection region in which the virtual object is allowed to be detected with reference to the installation position, and
the image visual recognition unit causes a travel state of the search wave traveling from the installation position in a direction along the installation direction in the detection region to be visually recognized as the search wave image.
